# EUROPEAN PATENT APPLICATION

(11) **EP 2 797 042 A1**
(43) Date of publication of application: **29.10.2014**
(21) Application number: 13164686.1
(22) Date of filing: 22.04.2013
(51) Int. Cl.: G06Q 20/34

(54) **Code card for obtaining music from a system for distributing music, use of a code card for obtaining music from a system for distributing music, and system and method for distributing music**

(71) Applicant: Garrett, David, 20354 Hamburg (DE)
(72) Inventor: Garrett, David, 20354 Hamburg (DE)
(74) Representative: Eisenführ Speiser

(57) **Abstract**

The present invention relates to a code card (1, 1', 1 ") for obtaining music from a system for distributing music. The code card (1, 1', 1") comprises a code (6) that is visually reproduced on the code card (1, 1', 1") and that allows obtaining a predetermined music selection associated with the code (6) from the system for distributing music. Furthermore, the present invention relates to a use of a code card (1, 1', 1") for obtaining music from a system for distributing music as well as to a system and a method for distributing music.

## Description

### FIELD OF THE INVENTION

The present invention relates to a code card for obtaining music from a system for distributing music and to a use of a code card for obtaining music from a system for distributing music. Furthermore, the present invention relates to a system and a method for distributing music.

### BACKGROUND OF THE INVENTION

It is known in the field of online music distribution to provide gift cards corresponding to a restricted monetary equivalent that can be used to download music from an online music store. An example of such cards are the so-called "iTunes gift cards", which can be purchased, e.g. online from Apple's iTunes store or from other retail stores, with different amounts of monetary credit. An iTunes gift card comprises a code that is visually reproduced on the iTunes gift card and that is associated with a certain amount of monetary credit, e.g., € 15,00 € 25,00 or € 50,00 which can be redeemed by any user having an iTunes store account by inputting the code on the iTunes store website. The monetary credit is then credited to the user's iTunes store account and he/she can download music worth the monetary credit. In order to prevent the code from being used again by the same or another user, it is inactivated once it has been inputted and the monetary credit has been credited.

The known gift cards have the disadvantage that they are quite impersonal as gifts, because they are only associated with a certain amount of monetary credit. Moreover, their use generally requires a user account at the respective online music store, which is often not available for persons below a certain age. For example, an iTunes store account is currently only available for persons being at least 13 years old.

### SUMMARY OF THE INVENTION

It is an object of the present invention to provide a code card for obtaining music from a system for distributing music that allows overcoming some or all of the above-mentioned disadvantages of gift cards known in the field of online music distribution. It is a further object of the present invention to provide a corresponding use of code card for obtaining music from a system for distributing music as well as a method and a system for distributing music.

In a first aspect of the present invention, a code card for obtaining music from a system for distributing music is presented, wherein the code card comprises:
- a code that is visually reproduced on the code card and that allows obtaining a predetermined music selection associated with the code from the system for distributing music.

The present invention is based on the idea that by providing a code card with a code that, instead of being associated with a certain amount of monetary credit, is associated with a predetermined music selection, the code card can make a gift that is almost as personal as giving as a present a music CD that one selects according to the taste and preferences of the presented. Moreover, the use of such a code card for obtaining music from a system for distributing music, e.g., an online music store, does - in principle - not necessitate the administration of a user account, because no monetary credit has to be managed. Instead, it becomes possible to let the user of the code card directly obtain the predetermined music selection associated with the code from the system for distributing music - without having to first create a user account. The code card can therefore also safely be used by younger persons who, because of their age, are not allowed to make use of known gift cards. In addition, it is possible to simplify the processing that has to be performed by the system for distributing music as well as to save storage capacity normally required to administrate a user account.

The code card according to the present invention has a number of additional advantages:
(i) Compared to music CDs, the code card does not have to be distributed via specialized music retailers, but can be sold at all kinds of different retailers, such as gas stations, phone shops, drug stores, coffee shops, kiosks, etc. Moreover, the code card is generally smaller and lighter than a music CD, in particular, when it is fabricated from plastic or paperboard, so that it can be transported and/or shipped at a lower cost. In addition, the costs of manufacturing a code card are typically much lower than the costs of manufacturing a music CD and a code card is also more eco-friendly than a music CD.
(ii) Compared to known gift cards, the code card is also more flexible in terms of "how much" one wants to give as a present. For example, if a certain music CD is sold for € 16,99 at Apple's iTunes store, an iTunes gift card corresponding to a monetary equivalent of € 25,00 has to be purchased in order to allow the presentee to obtain the CD from the iTunes store without having to chip in some of his own money. This may, however, be more than the giver of the gift actually would like to spend on the gift.

It is preferred that the predetermined music selection is music selected from the group consisting of a song, an album, multiple songs from a same artist, multiple albums from a same artist, multiple songs from more than one artist, and multiple albums from more than one artist.

Depending on the nature of the predetermined music selection (a song, an album, etc.), the code card provides different advantages. For example, if the predetermined music selection is an album or multiple albums from a same or from more than one artist, the code card is basically an equivalent of the album or the multiple albums. It can therefore be presented as a highly personal gift, just like a corresponding music CD or multiple music CDs. In contrast, if the predetermined music selection is a song or multiple songs from a same artist, the code card can be used advantageously for promotion purposes. For example, an artist may decide to give away code cards with codes that are associated with a song from his new album or with multiple songs from all of his albums. Receivers of the code cards who obtain the song or the multiple songs from the system for distributing music and who like the song(s) may then decide to actually obtain e.g. a full album at their own expense.

In this specification as well as in the appended claims, the singular term "artist" is used broadly to refer to a solo artist, such as a singer or a person playing an instrument, but also to a band, a big band, an orchestra, a musical or opera production, etc.

It is further preferred that the shape of the code card is quadratic or substantially quadratic.

Known gift cards usually have approximately the shape of a check card, such as a VISA card or a Mastercard, i.e., they are substantially wider than they are high. By providing the code card with a shape that is quadratic or substantially quadratic, the code card can easily be distinguished, e.g. in a retail store, from other, known gift cards. Moreover, because customers are already very familiar with a quadratic shape resp. a substantially quadratic shape from typical music CD packagings, such as a jewel case or a slimline jewel case, they may intuitively understand, e.g., when they see the code card for the first time in a retail store, that the code card is intended to be used for obtaining music (from the system for distributing music).

In this specification as well as in the appended claims, the term "substantially quadratic" is used to include also aspect ratios as they are known from typical music CD packagings. For example, a jewel case or a slimline jewel case are both 14.2 cm wide and 12.5 cm high (5.59 inch x 4.92 inch). An aspect ratio of 14.2 cm / 12.5 cm = 1.136 is therefore still regarded as being substantially quadratic.

It is preferred that the code card further comprises information that is visually reproduced on the code card and that relates to the contents of the predetermined music selection.

By providing the code card with information that is visually reproduced on the code card and that relates to the contents of the predetermined music selection, e.g., the title of a song or an album, the code card can be made more personal. If the code card is presented as a gift, the presentee is directly provided with information about the predetermined music selection. In addition, this feature also helps customers to be able to easily distinguish, e.g., in a retail store, code cards comprising codes associated to different predetermined music selections. It is then possible for the customers to more quickly recognize the code cards they are interested in resp. looking for.

It is further preferred that the code card comprises a front face and the information comprises an album cover that is reproduced on the front face.

By reproducing an album cover on the front face of the code card, the code card can be made even more personal, because, in this case, the appearance of the code card strongly resembles the appearance of a music CD. Moreover, because the album cover is reproduced on the front face of the code card, it can easily be appreciated when the code card is hanging on a shelf, e.g. in a retail store.

It is preferred that the code is concealed by a label or rubber layer that has to be removed or scratched-off to reveal the code.

By concealing the code by a label or rubber layer that has to be removed or scratched-off to reveal the code, it can be assured that it cannot be read, e.g., in a retail store, by an unauthorized person and used for obtaining music from the system for distributing music.

It is further preferred that the code card is packaged in an envelope such that without destroying the envelope it is not possible to read the code.

Packaging the code card in an envelope such that without destroying the envelope it is not possible to read the code provides an alternative to the use of a label or rubber layer for providing safety against unauthorized reading and use of the code for obtaining music from the system for distributing music.

It is preferred that the envelope is at least in part transparent such that at least a part of the information is visible through the envelope.

It is further preferred that the code is additionally associated with a software application and/or at least one file that can be purchased from the system for distributing music, wherein the software application, when executed resp. run, and/or the at least one file provides additional information related to the predetermined music selection.

This makes it possible to provide a user of the code card, who obtains the predetermined music selection associated with the code card from the system for distributing music, with the option to purchase additional information related to the predetermined music selection. For example, if the predetermined music selection is an album, the additional information may comprise an electronic version of the booklet of a corresponding music CD and/or pictures/videos of the artist (e.g. taken live at a concert), or the like. The additional information may be provided in the form of at least one file, e.g., a booklet may preferentially be provided as a PDF file ("Portable Document Format"), a WORD file, or the like, whereas pictures/videos may preferentially be provided as image/video files, e.g., JPEG files, MPEG files, or the like. Alternatively, the additional information may be provided in the form of a software application, e.g. an executable, a mobile app, or the like, which, when executed resp. run, provides the additional information.

In a second aspect of the present invention, a use of a code card as defined in any of claims 1 to 9 for obtaining music from a system for distributing music is presented, wherein the use comprises obtaining a predetermined music selection associated with the code from the system for distributing music.

In a third aspect of the present invention, a system for distributing music is presented, wherein the system comprises:
- a code card as defined in any of claims 1 to 9,
- a user interface for allowing a user of the code card to input the code,
- a network connection for conveying the inputted code to a music vendor,
- a music retriever for retrieving the predetermined music selection associated with the conveyed code,
- a distributing channel for distributing the retrieved predetermined music selection to the user of the code card.

In a fourth aspect of the present invention, a method for distributing music is presented, wherein the method comprises:
- providing a code card as defined in any of claims 1 to 9,
- inputting the code on a user interface, by a user of the code card,
- conveying the inputted code to a music vendor, via a network connection,
- retrieving the predetermined music selection associated with the conveyed code, by a music retriever,
- distributing the retrieved predetermined music selection to the user of the code card, via a distribution channel.

The system for distributing music resp. the method for distributing music preferably do not require the user of the code card to have resp. to first create a user account in order to be able to obtain the predetermined music selection associated with the code.

In the system for distributing music resp. the method for distributing music, it is preferred that the code is additionally associated with a software application and/or at least one file that can be purchased from the system for distributing music, wherein the software application, when executed resp. run, and/or the at least one file provides additional information related to the predetermined music selection, wherein the system for distributing music resp. the method for distributing music presents the software application and/or the at least one file to the user of the code card and allows the user of the code card to purchase the software application and/or the at least one file.

It shall be understood that the code card for obtaining music from a system for distributing music as defined claim 1, the use of a code card for obtaining music from a system for distributing music as defined in claim 10, the system for distributing music as defined in claim 11, and the method for distributing music as defined in claim 13 have similar and/or identical preferred embodiments, in particular, as defined in the dependent claims.

It shall be understood that a preferred embodiment of the invention can also be any combination of the dependent claims with the respective independent claim.

### BRIEF DESCRIPTION OF THE DRAWINGS

These and other aspects of the invention will be apparent from and elucidated with reference to the embodiments described hereinafter. In the following drawings:
- Fig. 1: shows schematically and exemplarily a first embodiment of a code card for obtaining music from a system for distributing music,
- Fig. 2: shows schematically and exemplarily a second embodiment of a code card for obtaining music from a system for distributing music,
- Fig. 3: shows schematically and exemplarily a third embodiment of a code card for obtaining music from a system for distributing music,
- Fig. 4: shows schematically and exemplarily an embodiment of a system for distributing music, and
- Fig. 5: shows a flowchart exemplarily illustrating an embodiment of a method for distributing music.

### DETAILED DESCRIPTION OF EMBODIMENTS

Throughout all the figures, same or corresponding elements are generally indicated by same or corresponding reference numerals.

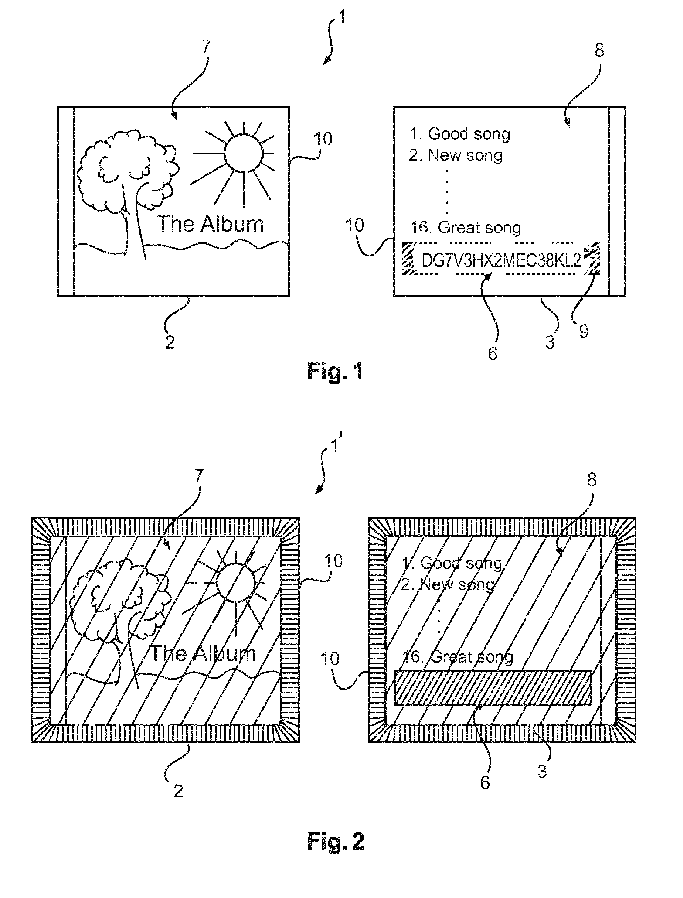

Fig. 1 shows schematically and exemplarily a first embodiment of a code card 1 for obtaining music from a system for distributing music (not shown in the figure). In this example, the code card 1 comprises only two faces: a front face 2, shown on the left side of the figure, and a back face 3, shown on the right side of the figure. The code card 1 is fabricated from paperboard and is smaller and lighter than a typical music CD packaging, such as a jewel case or a slimline jewel case. Here, the shape of the code card 1 is substantially quadratic with an aspect ratio (width / height) of 1.136, as it is known from the jewel case and the slimline jewel case.

The code card 1 comprises a code 6 that allows obtaining a predetermined music selection associated with the code 6 from the system for distributing music. Here, the code 6 is the 16-digit code "DG7V3HX2MEC38KL2", which is printed on the back face 3 of the code card 1. The format according to which the code 6 is formed is, in this example, such that the first two digits are fixed to be the characters "DG" and that the remaining 14 digits can each take one of the characters "A" to "Z" or one of the numerals "0" to "9". Therewith, the format of the code 6 can represent a set of different 16-digit combinations that is large enough to ensure with a sufficiently high probability that a valid code, i.e., a code that is associated with a certain predetermined music selection, cannot be guessed or otherwise determined by a person who is not in possession of the code.

In this embodiment, the predetermined music selection is an album, here exemplarily titled "The Album". In other embodiments, however, the predetermined music selection can also be a song, multiple songs from a same artist, multiple albums from a same artist, multiple songs from more than one artist, or multiple albums from more than one artist.

The code card 1, in this example, comprises information 7, 8 that is visually reproduced on the code card 1 and that relates to the contents of the predetermined music selection, here, the album "The Album". In particular, the information 7, 8 comprises an album cover 7 that is reproduced on the front face 2 of the code card 1 and, in this embodiment, a corresponding album back sheet 8 that is reproduced on the back face 3 of the code card 1. The album back sheet 8 includes, in this exemplary case, a list of the tracks of the album "The Album".

When the code card 1 has not yet been used, the code 6 on the back face 3 is concealed by a label or rubber layer 9 that has to be removed or scratched-off to reveal the code 6. In Fig. 1, the code card 1 is shown in a state where the label resp. rubber layer 9 has already been removed resp. scratched-off.

Fig. 2 shows schematically and exemplarily a second embodiment of a code card 1' for obtaining music from a system for distributing music (not shown in the figure). In this example, the code 6 on the back face 3 of the code card 1' is not concealed by a label or rubber layer that would have to be removed or scratched-off to reveal the code 6. Instead, the code card 1' is packaged in an envelope 10 such that without destroying the envelope 10 it is not possible to read the code 6.

Here, the envelope 10 is a foil in which the code card 1' is sealed. The foil 10 is, for the most part, transparent (visualized in the figure by the light shading) such that the information 7, 8 - or at least a part of it -, here, the album cover 7 that is reproduced on the front face 2 of the code card 1' and the corresponding album back sheet 8 that is reproduced on the back face 3 of the code card 1', is visible through the foil 10. In contrast, in the region where the code 6 is printed on the back face 3 of the code card 1, the foil 10 is non-transparent such that - as long as the foil 10 is not destroyed resp. removed - the code 6 is effectively concealed by the non-transparent region of the foil 10.

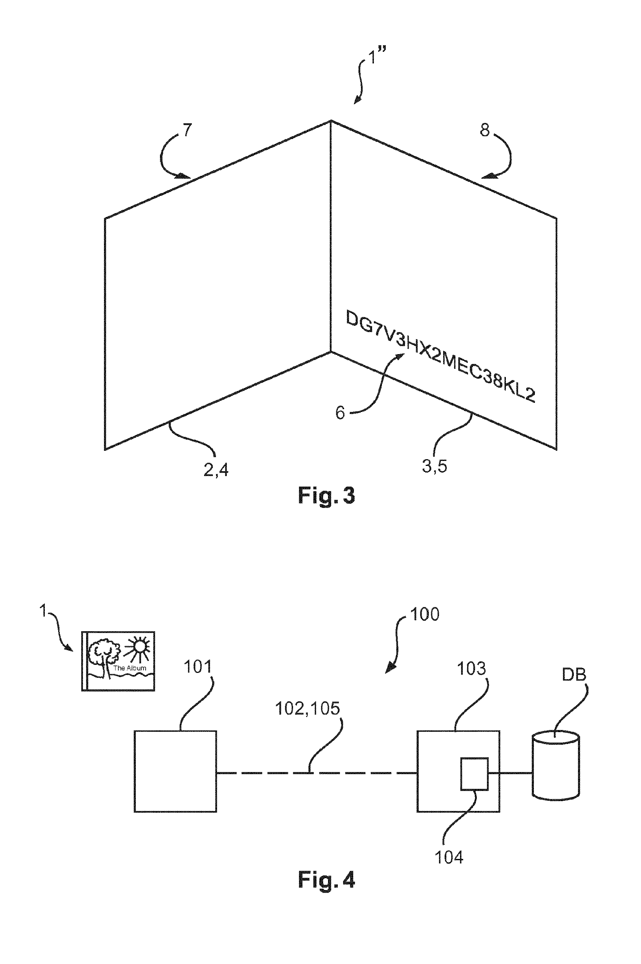

Fig. 3 shows schematically and exemplarily a third embodiment of a code card 1" for obtaining music from a system for distributing music (not shown in the figure). In this example, the code card 1" is a folded card that comprises four faces: a front face 2, a back face 3, and two inner faces 4, 5. The information 7, 8, here, the album cover 7 that is reproduced on the front face 2 of the code card 1" and the corresponding album back sheet 8 that is reproduced on the back face 3 of the code card 1" is not visible in the shown view.

In this example, the code 6 is printed on the inner face 5 of the code card 1 ". The code card 1" can then be packaged - in a folded configuration - in an envelope (not shown in the figure) such that without destroying the envelope it is not possible to read the code. The envelope can be the same as or similar to the envelope 10 described above with respect to the second embodiment; however, because the code 6 is not printed on the back face 3 but on the inner face 5 of the code card 1 ", the envelope may actually be completely transparent.

The code card 1" can comprise one or more additional sheets (not shown in the figure) that are preferably inserted between the two inner faces 4, 5. The additional sheets can comprise ancillary information relating to the contents of the predetermined music selection. For example, in this case, in which the predetermined music selection is the album "The Album", the additional sheets can resemble the pages of the booklet of a corresponding music CD.

Fig. 4 shows schematically and exemplarily an embodiment of a system 100 for distributing music. The system 100 comprises a code card, here, the code card 1 according to the above-described first embodiment, a user interface 101 for allowing a user of the code card 1 to input the code 6, a network connection 102 for conveying the inputted code 6 to a music vendor 103, a music retriever 104 for retrieving the predetermined music selection associated with the conveyed code 6, and a distributing channel 105 for distributing the retrieved predetermined music selection to the user of the code card 1.

The user interface 101 is, in this example, a website of the music vendor 103 that is reproduced on a computer, such as a desktop computer, a laptop computer, a tablet PC, a personal digital assistant (PDA), a smartphone, or the like (not shown in the figure) connected to the music vendor 103, e.g., an online music store, via the network connection 102. Alternatively, however, the user interface 101 may also be a software application, e.g., an executable, a mobile app, or the like, that is locally executed resp. run on the computer. In principle, it is also possible that the user interface 101 is - additionally or alternatively - a telephone hotline via which the user of the code card 1 can convey the code 6 to the music vendor 103. The network connection 102 may be a wired or a wireless connection, in particular, an Internet connection.

The system 100 is adapted such that, when a user of the code card 1 inputs the code 6 on the user interface 101, the inputted code 6 is conveyed to the music vendor 103 via the network connection 102. Next, the music retriever 104 retrieves the predetermined music selection associated with the conveyed code 6, e.g., from a database DB of digital music files. The music retriever 104 is typically a computer executing resp. running an algorithm that determines, e.g., from a look-up table or the like, the predetermined music selection that is associated with the conveyed code 6. This may include, either implicitly or explicitly, a check whether the conveyed code 6 is actually a valid code, i.e., a code that is associated with a certain predetermined music selection, and whether the code is still active (i.e., it has not yet been used and, therefore, not been inactivated). The predetermined music selection retrieved by the music retriever 104 is then distributed to the user of the code card 1 via the distribution channel 105. Here, the distribution channel 105 is the same network connection 102 that is also used for conveying the code 6 to the music vendor 3. However, the distribution channel 105 may also be e.g. another network connection (not shown in the figure).

In this embodiment, the user interface 101 is adapted to allow the user to manually input the code 6 on the user interface 101, e.g. by typing the code 6 via a keyboard or the like in a suitable editable text field (both not shown in the figure). It is, however, also possible that the user interface 101 comprises, additionally or alternatively, detection means that are able to automatically "read" the code 6. For example, the user interface 101 may comprise a camera, such as a web camera, together with (a) suitable image processing resp. pattern recognition algorithm(s) that is/are able to detect and read the code 6 when the code card 1 is held up to the camera. In order to support this task, the code card 1 may comprise e.g. additional signs or patterns that are visually reproduced on the code card 1 to aid in the detection resp. reading of the code 6. Additionally or alternatively, the code 6 may also be visually reproduced on the code card 1 in the form of a bar code, a QR code, or another code that is particularly suited for being detected resp. read by a computer (i.e., by (a) suitable image processing resp. pattern recognition algorithm(s)).

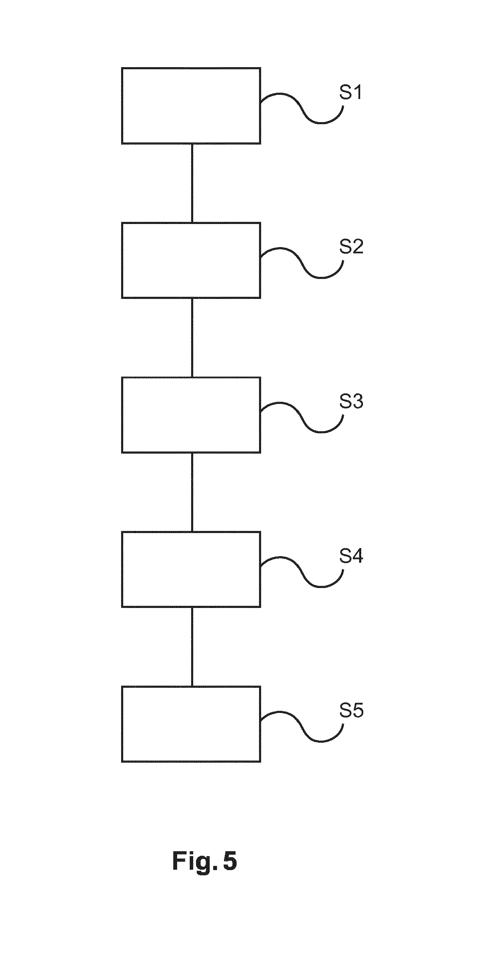

Fig. 5 shows a flowchart exemplarily illustrating an embodiment of a method for distributing music. The method comprises:

Step S1: Providing a code card, here, the code card 1 according to the above-described first embodiment.

Step S2: Inputting the code 6 on a user interface 101, by a user of the code card 1.

Step S3: Conveying the inputted code 6 to a music vendor 103, via a network connection 102.

Step S4: Retrieving the predetermined music selection associated with the conveyed code 6, by a music retriever 104.

Step S5: Distributing the retrieved predetermined music selection to the user of the code card 1, via a distribution channel 105.

The method for distributing music can be performed by means of the system 100 for distributing music described in the above embodiment. Further details of the method for distributing music can be understood by those skilled in the art in practicing the claimed invention from Fig. 4 together with the accompanying description.

While in the above-described embodiments of the system 100 for distributing music resp. the method for distributing music, the code card is the code card 1 according to the above-described first embodiment, the code card can also be one of the code cards 1', 1" according to the above-described second and third embodiments. The further configurations of the code card 1 described in the context of the system 100 for distributing music resp. the method for distributing music (e.g., additional signs or patterns that are visually reproduced on the code card 1 to aid in the detection resp. reading of the code 6; bar code, QR code, or the like, visually reproduced on the code card 1) are also applicable to the code cards 1', 1 ".

The code 6 of the code cards 1, 1', 1" according to the above-described first to third embodiments is, in this example, additionally associated with a software application that can be purchased from the system 100 for distributing music. The software application, when executed resp. run, provides additional information related to the predetermined music selection.

In the above-described embodiments of the system 100 for distributing music resp. the method for distributing music, the system for distributing music resp. the method for distributing music presents the software application to the user of the code card 1, 1', 1" and allows the user of the code card 1, 1', 1" to purchase the software application. In this example, the software application is presented to the user of the code card 1, 1', 1" via the user interface 101, here, the website of the music vendor 103, together with further details about the price, about available payment methods, or the like. When the user of the code card 1, 1', 1" decides to purchase the software application and the purchase is successfully completed, the software application is distributed to the user of the code card 1, 1', 1 ", here, via the distribution channel 105.

In this example, where the predetermined music selection is the album "The Album", the additional information comprises an electronic version of the booklet of a corresponding music CD and pictures/videos of the artist (e.g., taken live at a concert). The booklet and picture/vides are provided in the form of the software application, e.g., an executable, a mobile app, or the like, which, when executed resp. run, provides the additional information.

The software application may comprise further features, e.g., it may be able to give alerts when a tour of the artist is planned, it may provide tour dates/locations, it may be able to establish a connection to an online store that allows purchasing tickets for (a) concert(s) of the artist, it may include (a) game(s) related to the artist, or the like.

It shall be made clear that in the above-described embodiments of the code card 1, 1', 1" for obtaining music from a system 100 for distributing music, the use of a code card 1, 1', 1" for obtaining music from a system 100 for distributing music, and the system 100 and the method for distributing music, it is typically foreseen that the user of the code card 1, 1', 1 ", who obtains the predetermined music selection associated with the code 6 of the code card 1, 1', 1" from the system 100 for distributing music is also given the right to use, e.g., hear, the predetermined music selection (at least in the case that he/she rightfully obtained possession of the code card 1, 1', 1 ", e.g., because he/she was presented with the code card 1, 1', 1" as a gift by someone who bought the code card 1, 1', 1" at a retail store).

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A code card (1, 1', 1") for obtaining music from a system for distributing music, comprising:
- a code (6) that is visually reproduced on the code card (1, 1', 1") and that allows obtaining a predetermined music selection associated with the code (6) from the system for distributing music.

2. The code card (1, 1', 1") according to claim 1, wherein the predetermined music selection is music selected from the group consisting of a song, an album, multiple songs from a same artist, multiple albums from a same artist, multiple songs from more than one artist, and multiple albums from more than one artist.

3. The code card (1, 1', 1 ") according to claim 1 or 2, wherein the shape of the code card (1, 1', 1 ") is quadratic or substantially quadratic.

4. The code card (1, 1', 1 ") according to any of the preceding claims, wherein the code card (1, 1', 1") further comprises information (7, 8) that is visually reproduced on the code card (1, 1', 1") and that relates to the contents of the predetermined music selection.

5. The code card (1, 1', 1 ") according to claim 4, wherein the code card (1, 1', 1") comprises a front face (2) and the information (7, 8) comprises an album cover (7) that is reproduced on the front face (2).

6. The code card (1, 1', 1 ") according to any of the preceding claims, wherein the code (6) is concealed by a label or rubber layer (9) that has to be removed or scratched-off to reveal the code (6).

7. The code card (1, 1', 1 ") according to any of the preceding claims, wherein the code card (1, 1', 1") is packaged in an envelope (10) such that without destroying the envelope (10) it is not possible to read the code (6).

8. The code card (1, 1', 1") according to claim 7 when referring directly or indirectly to claim 4 or 5, wherein the envelope (10) is at least in part transparent such that at least a part of the information (7, 8) is visible through the envelope (10).

9. The code card (1, 1', 1") according to any of the preceding claims, wherein the code (6) is additionally associated with a software application and/or at least one file that can be purchased from the system for distributing music, wherein the software application, when executed resp. run, and/or the at least one file provides additional information related to the predetermined music selection.

10. A use of a code card (1, 1', 1") as defined in any of claims 1 to 9 for obtaining music from a system for distributing music, wherein the use comprises obtaining a predetermined music selection associated with the code (6) from the system for distributing music.

11. A system (100) for distributing music, comprising:
- a code card (1, 1', 1 ") as defined in any of claims 1 to 9,
- a user interface (101) for allowing a user of the code card (1, 1', 1") to input the code (6),
- a network connection (102) for conveying the inputted code (6) to a music vendor (103),
- a music retriever (104) for retrieving the predetermined music selection associated with the conveyed code (6), and
- a distributing channel (105) for distributing the retrieved predetermined music selection to the user of the code card (1, 1', 1").

12. The system (100) for distributing music according to claim 11, wherein the code (6) is additionally associated with a software application and/or at least one file that can be purchased from the system (100) for distributing music, wherein the software application, when executed resp. run, and/or the at least one file provides additional information related to the predetermined music selection, wherein the system (100) for distributing music presents the software application and/or the at least one file to the user of the code card (1, 1', 1 ") and allows the user of the code card (1, 1', 1 ") to purchase the software application and/or the at least one file.

13. Method for distributing music, comprising:
- providing (S1) a code card (1, 1', 1") as defined in any of claims 1 to 9,
- inputting (S2) the code (6) on a user interface (6), by a user of the code card (1, 1', 1 "),
- conveying (S3) the inputted code (6) to a music vendor (103), via a network connection (102),
- retrieving (S4) the predetermined music selection associated with the conveyed code (6), by a music retriever (104),
- distributing (S5) the retrieved predetermined music selection to the user of the code card (1, 1', 1 "), via a distribution channel (105).

14. The method for distributing music according to claim 13, wherein the code (6) is additionally associated with a software application and/or at least one file that can be purchased from the system (100) for distributing music, wherein the software application, when executed resp. run, and/or the at least one file provides additional information related to the predetermined music selection, wherein the method for distributing music presents the software application and/or the at least one file to the user of the code card (1, 1', 1 ") and allows the user of the code card (1, 1', 1 ") to purchase the software application and/or the at least one file.
